# EUROPEAN PATENT APPLICATION

(11) **EP 0 570 601 A1**
(43) Date of publication of application: **24.11.1993**
(21) Application number: 93911643.0
(22) Date of filing: 10.12.1992
(51) Int. Cl.: B60J 7/053, B60J 7/10

(54) **AUTOMOBILE BODY WITH CONVERTIBLE ROOF**

(30) Priority: 12.12.1991 SU 5015975
(71) Applicant: SHEVTSOV, Dmitry Alexandrovich, Voronezh, 394018 (RU)
(72) Inventor: SHEVTSOV, Dmitry Alexandrovich, Voronezh, 394018 (RU)
(74) Representative: Füchsle, Klaus, Dipl.-Ing.
(86) International application number: RU9200236
(87) International publication number: WO9311957

(57) **Abstract**

The invention relates to transport engineering, in particular to automobile bodies with convertible roof. An automobile body (1) with convertible roof, which comprises a windshield frame (2) and a back frame (3) connected to a retractable roof panel (4), a group of guiding elements (6) intended for retracted position of the roof panel and connected to the cover of the front (8) or the back (7) section of the body, further comprises another group of guiding elements (5) intended for the erected position of the roof panel and connected to the windshield frame (2) or to the back frame (3), both groups of guiding elements interacting with the roof panel (4) in the latter's corresponding positions and at least one of them being movable.

## Description

### Field of Art

The present invention relates to transport and, more particularly, to convertible-top bodies of motor cars.

### Background of the Invention

Known in the prior art is an automobile vehicle body comprising a removable rigid roof connected to front and rear window units and retracted under a cover pivoted at the front or a rear of the vehicle, wherein the underneath part of said cover is provided with guide elements to receive said roof (GB, A, 1181875).

This design of the body fails to ensure an optimum trajectory of roof movement and calls for a sophisticated construction of roof members in order to achieve their coordinated action.

Another known car body with a rigid retractable roof comprises two segments articulated to the body which, together form the rear framework, and a rigid roof whose front end, when lifted, is installed on the upper part of the wind-screen frame while its rear end is articulated to the upper part of one of the segments of the rear framework.

To retract the roof, it is turned back from said segment then retracted jointly with it into the body (GB, A, 1159790).

This construction of the roof retracting mechanism is combersome, complicated and reduces the volumetric capacity of the passenger compartment.

### Disclosure of the Invention

The main object of the invention is to provide a wider choice of roof retracting systems for installation on various types of car bodies.

This object is accomplished by providing a convertible top car body which comprises a wind-screen frame and a rear framework, both intended for attachment of the retractable roof panel, a group of guide elements for the retracted position of the roof panel, said group being connected with the cover of the body front or rear compartments, and has another group of guide elements for the lifted position of the roof panel, said group being connected with the wind-screen frame or the rear framework, both groups of guide members interacting with the roof panel in its respective positions, and at least one of said groups is capable of moving.

The group of lifted position guide elements is capable of moving parallel to the vertical plane passing through the fore-and-aft axis of the car.

The group of the retracted position guide elements may be either fixed in the body interior or be capable of moving parallel to the vertical plane passing through the fore-and-aft axis of the car.

The group of the retracted position guide elements may also be installed on the cover of the front or rear body compartments movably with respect to said cover.

Both groups of guide elements may also be integrated into a single assembly.

### Brief Description of the Drawings

The present invention is described by way of its preferred embodiments with reference to the appended drawings, wherein:
Fig.1 is a version of the body with a movable group of lifted position guide elements installed on the rear framework and fixed group of retracted position guide elements installed, for example, inside the body;
Fig.1a, b, c, d, - phases of body top movement;
Fig.2 is a version of the body with a group of lifted position guide elements installed on the wind-screen frame and a movable group of retracted position guide elements located in the front of the car body;
Fig.2a, b, c - phases of body top movement;
Fig.3 is a version of the body with a movable group of retracted position guide elements located in the rear of the car body;
Fig.4 is a version of the body wherein both groups of guide elements are integrated into a single assembly;
Fig.5 is a version of the body wherein the group of retracted position guide elements is combined with, and disposed underneath, the boot cover.

### Embodiments of the Invention

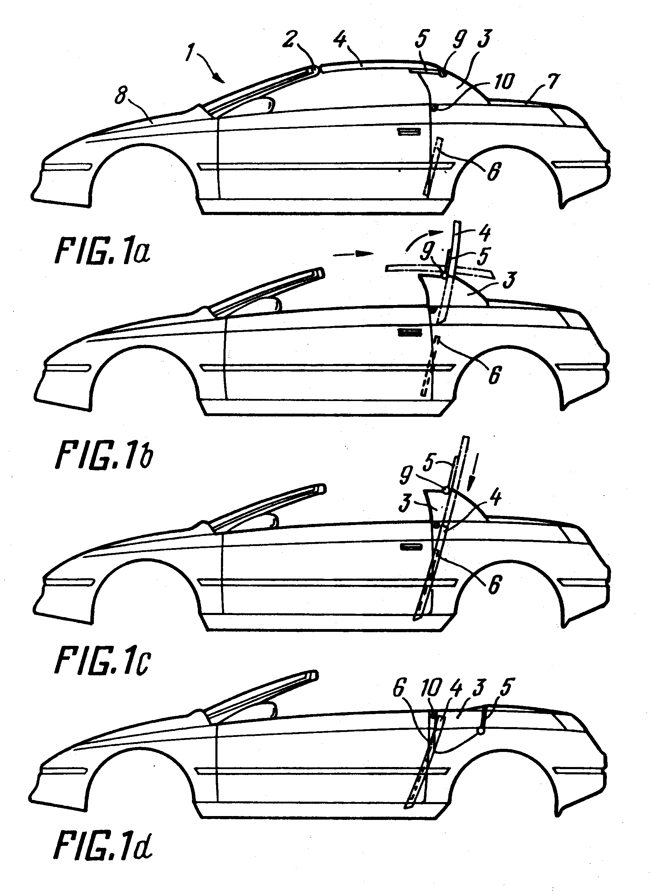

The rigid retractable roof panel 4 is installed on the wind-screen frame 2 and rear framework 3 (Fig.1a) of the car body 1.

In the lifted position the roof panel 4 is moved rearward over the group of lifted position guide elements 5 which is installed movably on the rear framework 3 by means of a pivot 9 and is concurrently or subsequently turned up to the locked position (Fig.1b).

Then the roof panel 4 goes down over the group of lifted position guide elements 5 and interacts with the fixed group of retracted position guide elements 6, sliding over said group to the locked position inside the body 1 (Fig.1c).

Besides, the rear framework 3 may be retracted into the body by means of, say, a pivot 10 (Fig.1d).

The roof panel 4 is returned from the retracted to the lifted position in the reverse order of steps.

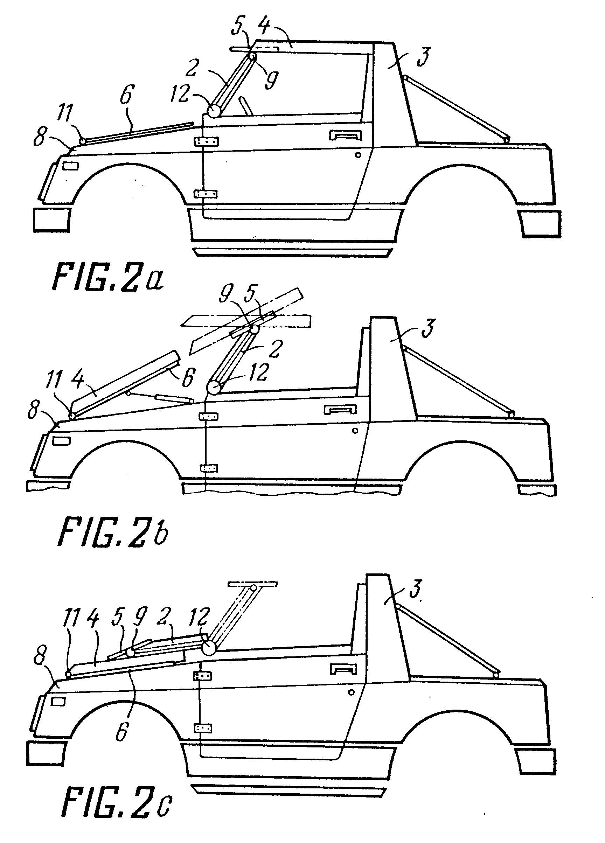

In another possible version of the body the group of lifted position guide elements 5 is movably mounted of the wind-screen frame 2 by means of the pivot 9 while the group of retracted position guide elements 6 is turnably secured on the cover of the body front compartment 8 by means of a pivot 11 (Fig.2a).

The roof panel 4 moves over the group of the lifted position guide elements 5 towards the group of retracted position guide elements 6 (fig.2b).

The angular displacements of both groups of guide elements 5, 6 result in alignment of their longitudinal axes so that the roof panel can interact with both groups of guide elements in its intermediate positions.

Besides, in case the wind-screen frame 2 is of a movable construction, it can be folded down on the cover of the body front compartment 8 by means of a pivot 12 (Fig.2c).

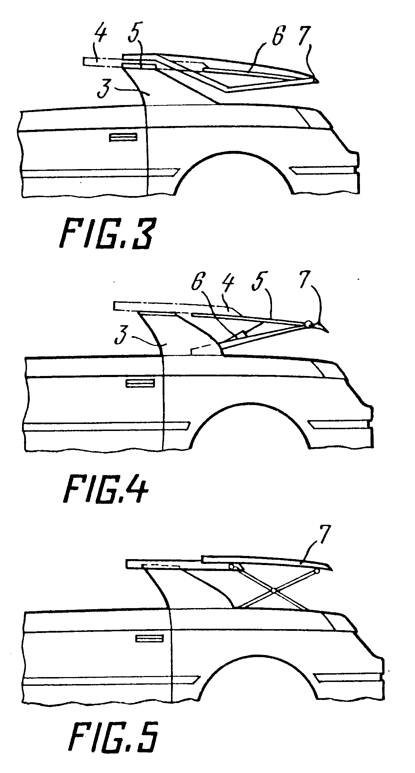

The body may also have the group of the lifted position guide elements 5 installed immovably on the rear framework 3 while the movable group of the retracted position guide elements 6 is located in the rear of the body (Fig.3).

The group of retracted position guide elements 6 can move parallel with the vertical plane passing through the fore-and-aft axis of the car to such a point where it is capable of interacting with the roof panel for which purpose said group of guide elements 6 can move relative to the body rear compartment cover 7.

The trajectory of movement of the group of retracted position guide elements 6 determines the plane-parallel movement of the roof panel 4.

In this case said group of retracted position guide elements 6 may be positioned:
- under the body rear compartment cover 7 (Fig.3);
- above the body rear compartment cover 7 (Fig.4);
- combined with, and installed underneath, the body rear compartment cover 7 (Fig.5).

In another possible version of the body both groups of guide elements 5, 6 are integrated into a single assembly (Fig.4).

In this case the group of lifted position guide elements 5 is linked with the group of retracted position guide elements 6 with a provision for moving relative to the latter by, for example, sliding, turning or both simultaneously.

Said assembly can be positioned mainly after the rear framework 3, i.e. at the location of the group of retracted position guide elements 6.

The above-described versions for conversion of the body top can be realized by the use of commonly known structural members: for example, the guide elements may be constituted by various slides, rollers, ball races, etc., the movable parts may be operated either manually-by springs, torsion rods, links, etc. or electrically-by electric motors, limit micro-switches, etc.

### Industrial Applicability

The present invention will prove useful in the sphere of transport, e.g. in convertible-top transport vehicles, excursion boats, etc.

The currently-produced motor vehicles can be equipped with the disclosed system without considerable modifications of their bodies.

## Claims

1. A convertible-top car body (1) comprising a wind-screen frame (2) and a rear framework (3) with a retractable roof panel (4) connected thereto, a group of roof panel retracted position guide elements (6) connected with the cover of body front (8) or rear (7) compartments **characterized** in that is has another group of roof panel lifted position guide elements (5) connected to the wind-screen frame (2) or rear framework (3), both groups of guide elements interact with the roof panel (4) in its respective positions and at least one of said groups is capable of moving.

2. A car body as claimed in Claim 1, **characterized** in that the group of lifted position guide elements (5) moves parallel to the vertical plane passing through the fore-and-aft axis of the car.

3. A car body as claimed in Claim 1, **characterized** in that the group of retracted position guide elements (6) is immovably installed in the car interior.

4. A car body as claimed in Claim 1, **characterized** in that the group of retracted position guide elements (6) moves parallel to the vertical plane passing through the fore-and-aft axis of the car.

5. A car body as claimed in claim 1, 4 **characterized** in that the group of retracted position guide elements (6) is installed on the cover of the front (8) or rear (7) body compartments with a provision for moving relative to said cover.

6. A car body as claimed in Claims 1, 2, 3, 4, 5 **characterized** in that both groups of guide elements (5, 6) are integrated into a single assembly.
